# EUROPÄISCHE PATENTSCHRIFT

(11) **EP 3 423 301 B1**
(45) Veröffentlichungstag und Bekanntmachung des Hinweises auf die Patenterteilung: **08.04.2020**
(21) Anmeldenummer: 17707032.3
(22) Anmeldetag: 24.02.2017
(51) Int. Cl.: B60N 2/862, B60N 2/865

(54) **KOPFSTÜTZE MIT VERBESSERTER VERSTELLEINRICHTUNG**
HEADREST WITH AN IMPROVED ADJUSTMENT DEVICE
APPUI-TÊTE À DISPOSITIF DE RÉGLAGE AMÉLIORÉ

(30) Priorität: 29.02.2016 DE 102016103558
(43) Veröffentlichungstag der Anmeldung: 09.01.2019
(73) Patentinhaber: Jifeng Automotive Interior GmbH, 97318 Kitzingen (DE)
(72) Erfinder: HEMMER, Michael, 50169 Kerpen (DE); QUANDT, Denis, 51069 Köln (DE); HÜRTGEN, Jürgen, 53909 Zülpich-Sinzenich (DE); SEIDEL, Christoph, 97346 Iphofen (DE); STEINMETZ, Rolf, 40489 Düsseldorf-Angermund (DE)
(74) Vertreter: Lohmanns, Bernard
(86) Internationale Anmeldenummer: PCT/EP2017/054396
(87) Internationale Veröffentlichungsnummer: WO 2017/148831

(56) Entgegenhaltungen:
- EP-A1- 2 901 894
- WO-A1-2014/122379
- US-A1- 2010 127 548

## Beschreibung

Die Erfindung betrifft eine Kopfstütze mit Verstelleinrichtung. Die erfindungsgemäße Verstelleinrichtung ist vorgesehen, das zur Kopfstütze gehörige, für die Anlage eines Insassenkopfes vorgesehene Kopfteil relativ zu einem Basisteil im Wesentlichen linear zu verstellen. Derartige Kopfstützen mit Verstelleinrichtung sind insbesondere im Kraftfahrzeugbereich bekannt (Z.B. EP-A-2901894). Die Verstellung der Kopfstütze erfolgt in der Regel manuell und dient dazu, den Komfort und/oder die Sicherheit des auf dem zugehörigen Fahrzeugsitz sitzenden Fahrzeuginsassen zu erhöhen, da aufgrund der Verstellung eine optimale Anpassung des eine Abstützfläche bereitstellenden Kopfteils an die sich aus der Sitzposition und/oder die Körpergröße des Insassen ergebende Kopfposition ermöglicht ist und insbesondere ein Abstand zwischen Abstützfläche und Kopf minimiert werden kann. Die Verstellung einschließlich deren Festlegung muss vergleichsweise einfach, reibungsarm und verschleißfrei durchführbar und ferner die Herstellung der Kopfstütze kostengünstig möglich sein. Darüber hinaus muss eine sichere Verriegelung der Kopfstütze in der jeweiligen Stellung gewährleistet werden.

Es ist deshalb die Aufgabe der vorliegenden Erfindung, eine Kopfstütze mit Verstelleinrichtung zur Verfügung zu stellen, die diese Eigenschaften aufweist. Gelöst wird die Aufgabe mit einer Kopfstütze mit den Merkmalen des Anspruchs 1. Vorteilhafte Ausgestaltungen sind jeweils Gegenstand der abhängigen Ansprüche. Bevorzugte Ausführungsformen sind in den Figuren gezeigt, ohne die Erfindung auf die gezeigten Ausführungsformen zu beschränken.

Die Erfindung betrifft eine Kopfstütze für ein Kraftfahrzeug mit einem Basisteil zur Befestigung an einer Rückenlehne eines Fahrzeugsitzes, beispielsweise eines der Vordersitze oder eines der Sitze im Fond der Fahrgastzelle. Die Kopfstütze weist ferner ein zur Anlage für einen Kopf eines Fahrzeuginsassen ausgebildetes Kopfteil auf, an dem beispielsweise ein Polsterteil befestigt ist. Ferner ist eine Verstelleinrichtung zwischen Basisteil und Kopfteil vorgesehen, um eine im Wesentlichen lineare Verstellung des Kopfteils relativ zum Basisteil zu bewirken. Die Verstellung erfolgt zwischen einer Minimalstellung, bei der der Abstand zwischen Basisteil und Kopfteil minimal ausfällt, und einer Maximalstellung, bei der der Abstand zwischen Basisteil und Kopfteil maximal ausfällt. Auch wenn bei der im Wesentlichen linearen Linearverstellung eine Verstellung entlang einer leicht gekrümmten Wegstrecke nicht ausgeschlossen sein soll, so ist die erfindungsgemäße Verstelleinrichtung besonders dazu geeignet, eine strikte lineare Verstellung zu realisieren. Bezüglich der Richtung der Verstellung wäre auch eine zur Fahrzeuglängsachse vertikale Verstellung mit der erfindungsgemäßen Verstelleinrichtung denkbar. Bevorzugt ist die erfindungsgemäße Verstelleinrichtung ausgelegt, eine Verstellung in einer zur Fahrzeuglängsachse parallelen Richtung (auch Längsverstellung genannt) oder in einer Richtung, die die Fahrzeuglängsachse in einem spitzen Winkel schneidet, vorzunehmen. Es können aber auch weitere Verstelleinrichtungen vorgesehen sein, um zusätzlich eine zur Fahrzeuglängsachse im Wesentlichen vertikale Verstellung (auch Höhenverstellung genannt) vornehmen zu können. Die Verstelleinrichtung weist ein Zwischenteil und mehrere sich synchron bei der Verstellung verschwenkende Schwenkhebel auf, die so angeordnet und ausgebildet sind, dass zwischen dem Kopfteil und dem Zwischenteil wenigstens ein erstes Gelenkparallelogramm und zwischen dem Zwischenteil und Basisteil wenigstens ein zweites Gelenkparallelogramm ausgebildet sind. Die Verstelleinrichtung weist erfindungsgemäß ferner wenigstens einen Synchronhebel, bevorzugt zwei Synchronhebel, zwischen dem Kopfteil und dem Basisteil auf, um eine relative Ausrichtung des Kopfteils bezüglich des Basisteils bei der Verstellung festzulegen und die Schwenkbewegung der Schwenkhebel des ersten Gelenkparallelogramms mit der Schwenkbewegung der Schwenkhebel des zweiten Gelenkparallelogramms zu synchronisieren. Bevorzugt ist der Synchronhebel mit einem Ende am Kopfteil und mit seinem anderen Ende an einem der Schwenkhebel des zweiten oder einer der zweiten Gelenkparallelogramme angelenkt. Vorzugsweise ist die Verstelleinrichtung zumindest teilweise, besonders bevorzugt vollständig, aus Kunststoff gefertigt. Sie kann jedoch ebenso zumindest teilweise oder auch vollständig zum Beispiel aus Metall oder Holz gefertigt sein. Darüber hinaus kann sie auch aus einer Kombination der vorstehend erwähnten bevorzugten Materialien gefertigt sein.

Die Erfindung zeichnet sich dadurch aus, dass die Kopfstütze ferner eine Rasteinrichtung aufweist, um das Kopfteil relativ zum Basisteil rastend festzulegen. Es hat sich gezeigt, dass durch eine Rasteinrichtung eine vergleichsweise variable Verstellung des Kopfteils gegenüber dem Basisteil zuverlässig zu realisieren ist. Beispielsweise ist die Rasteinrichtung vorgesehen, einen Rasteingriff zwischen dem Kopfteil und dem Basisteil oder dem Kopfteil und dem Zwischenteil vorzusehen. Bevorzugt ist jedoch vorgesehen, dass die Rasteinrichtung ausgebildet ist, den Rasteingriff zwischen dem Basisteil und dem Zwischenteil oder zwischen dem Basisteil und einem der Schwenkhebel eines der zweiten Gelenkparallelogramme auszubilden.

Bevorzugt weist die Rasteinrichtung einen einseitig verschwenkbar gelagerten Rasthebel auf. Dieser ist bevorzugt zwischen dem Basisteil und dem Zwischenteil wirksam angeordnet.

Gemäß einer alternativen Ausgestaltung kann die Rasteinrichtung auch wenigstens einen mit einem der Schwenkhebel eines der zweiten Gelenkparallelogramme verbundenen Rasthebel aufweisen.

Gemäß einer bevorzugten Ausgestaltung ist vorgesehen, dass die Rasteinrichtung eine mehrere Raststufen definierende Rastkontur aufweist. Bevorzugt ist die Rastkontur am Rasthebel ausgebildet.

Gemäß einer weiteren Ausgestaltung ist vorgesehen, dass die Anordnung der Raststufen der Rastkontur durch eine Krümmung definiert ist.

Bevorzugt ist vorgesehen, dass der einseitig verschwenkbar gelagerte Rasthebel am Basisteil schwenkbeweglich gelagert ist und beispielsweise mit einem am Zwischenteil vorgesehenen Rastvorsprung bzw. Raststeg oder einer am Zwischenteil zur schwenkbeweglichen Lagerung eines Schwenkhebels vorgesehenen Achse zusammenwirkt, um das Zwischenteil gegenüber dem Basisteil und damit aufgrund der Kopplung des Synchronhebels das Kopfteil gegenüber dem Basisteil festzulegen.

Um einen sicheren Eingriff zu gewähren, ist bei einer bevorzugten Ausgestaltung vorgesehen, dass der einseitig verschwenkbar gelagerte Rasthebel in Richtung des Rasteingriffs, also den Rasteingriff herstellend und haltend, elastisch vorgespannt ist.

Gemäß einer bevorzugten Ausgestaltung weist der einseitig verschwenkbar gelagerte Rasthebel an seinem schwenkbeweglich festgelegten Ende eine Rasthebelverlängerung auf, die eine Betätigungsfläche für das manuelle Entrasten des Rasteingriffs, beispielsweise zwischen dem Rasthebel und dem Zwischenteil, definiert.

Bevorzugt ist vorgesehen, dass die Verstelleinrichtung wenigstens zwei erste und zwei zweite Gelenkparallelogramme aufweist und die Rasteinrichtung in dem durch die ersten und zweiten Gelenkparallelogramme definierten Bauvolumen zumindest in der Maximalstellung der Kopfstütze teilweise, bevorzugt vollständig bis auf die an dem einseitig verschwenkbar gelagerten Rasthebel an seinem schwenkbeweglich festgelegten Ende optional ausgebildete Rasthebelverlängerung, angeordnet ist. Dadurch kann eine kompakte Ausgestaltung der erfindungsgemäßen Kopfstütze erreicht werden.

Eine noch weitere vorteilhafte Ausgestaltung sieht vor, dass die Rasteinrichtung ein der bei einer Verstellung der Verstelleinrichtung bewirkten Verstellbewegung der Verstelleinrichtung folgendes, mit der Rasteinrichtung wirkverbundenes Betätigungsmittel, im Gegensatz zum Beispiel zu der weiter oben erwähnten, als Betätigungsfläche dienenden, an dem am Basisteil schwenkbeweglich gelagerten Rasthebel ausgebildeten Rasthebelverlängerung, die der Verstellbewegung der Verstelleinrichtung in einem im Fahrzeug verbauten Zustand der Kopfstütze nicht folgt, für das manuelle Entrasten aufweist. Das sich mit der Verstelleinrichtung mitbewegende Betätigungsmittel kann in vorteilhafter Weise zum Beispiel kopfteilseitig vorgesehen sein und beispielsweise über ein am Kopfteil angeordnetes Betätigungselement, zum Beispiel Taster, Schalter, Hebel und dergleichen, betätigt werden. Somit ist ein manuelles Entrasten der Rasteinrichtung zur Verstellung der Verstelleinrichtung durch einen Fahrzeuginsassen aufgrund der am Kopfteil erzielten, leichteren Zugänglichkeit komfortabler möglich.

Gemäß einer weiteren Variante ist vorgesehen, dass die Schwenkbewegung wenigstens eines Schwenkhebels beanschlagt ist, um die Verstellung des Kopfteils in der Maximalstellung zu begrenzen. Gemäß einer bevorzugten Variante ist jedoch ferner eine Kniehebelmechanik, beispielsweise zwischen Kopfteil und Basisteil, vorgesehen, um die Verstellung des Kopfteils relativ zum Basisteil in der Maximalstellung zu begrenzen. Beispielsweise wird die Stellwegbegrenzung durch einen ersten, am Basisteil schwenkbeweglich gelagerten und einen zweiten, am Kopfteil schwenkbeweglich gelagerten Hebelarm, die mit ihren entgegengesetzten Enden schwenkbeweglich verbunden sind, realisiert.

Weitere Merkmale und Vorteile der Erfindung ergeben sich aus der folgenden Beschreibung zweier nicht einschränkend zu verstehender Ausführungsbeispiele der Erfindung, die im Folgenden unter Bezugnahme auf die Zeichnung näher erläutert werden. In dieser Zeichnung zeigen schematisch:
- Fig. 1: eine Seitenansicht eines ersten Ausführungsbeispiels einer Kopfstütze mit Verstelleinrichtung gemäß der Erfindung in einer Maximalstellung,
- Fig. 2: eine Seitenansicht der Verstelleinrichtung der Kopfstütze aus Fig. 1 in einer Minimalstellung,
- Fig. 3: eine perspektivische Ansicht der Verstelleinrichtung der Kopfstütze aus Fig. 1 von schräg vorne in der Minimalstellung,
- Fig. 4: eine Vorderansicht der Verstelleinrichtung der Kopfstütze aus Fig. 1 in der Maximalstellung,
- Fig. 5: eine Vorderansicht der Verstelleinrichtung der Kopfstütze aus Fig. 1 in der Minimalstellung,
- Fig. 6: eine Seitenschnittansicht der Verstelleinrichtung der Kopfstütze aus Fig. 1 entlang der in Fig. 4 gezeigten Schnittlinie A-A in der Maximalstellung,
- Fig. 7: eine Seitenschnittansicht der Verstelleinrichtung der Kopfstütze aus Fig. 1 entlang der in Fig. 5 gezeigten Schnittlinie B-B in der Minimalstellung,
- Fig. 8: eine perspektivische Ansicht einer Verstelleinrichtung eines zweiten Ausführungsbeispiels einer Kopfstütze gemäß der Erfindung von schräg vorne in einer Maximalstellung,
- Fig. 9: eine Vorderansicht der Verstelleinrichtung aus Fig. 8 in der Maximalstellung,
- Fig. 10: eine Seitenansicht der Verstelleinrichtung aus Fig. 8 in der Maximalstellung,
- Fig. 11: eine Seitenschnittansicht der Verstelleinrichtung aus Fig. 8 in der Maximalstellung entlang der in Fig. 9 gezeigten Schnittlinie C-C,
- Fig. 12: eine perspektivische Ansicht der Verstelleinrichtung aus Fig. 8 von schräg vorne in einer Minimalstellung,
- Fig. 13: eine Vorderansicht der Verstelleinrichtung aus Fig. 12 in der Minimalstellung,
- Fig. 14: eine Seitenansicht der Verstelleinrichtung aus Fig. 12 in der Minimalstellung und
- Fig. 15: eine Seitenschnittansicht der Verstelleinrichtung aus Fig. 12 in der Minimalstellung entlang der in Fig. 13 gezeigten Schnittlinie D-D.

In den unterschiedlichen Figuren sind hinsichtlich ihrer Funktion gleichwertige Teile stets mit denselben Bezugszeichen versehen, so dass diese in der Regel auch nur einmal beschrieben werden.

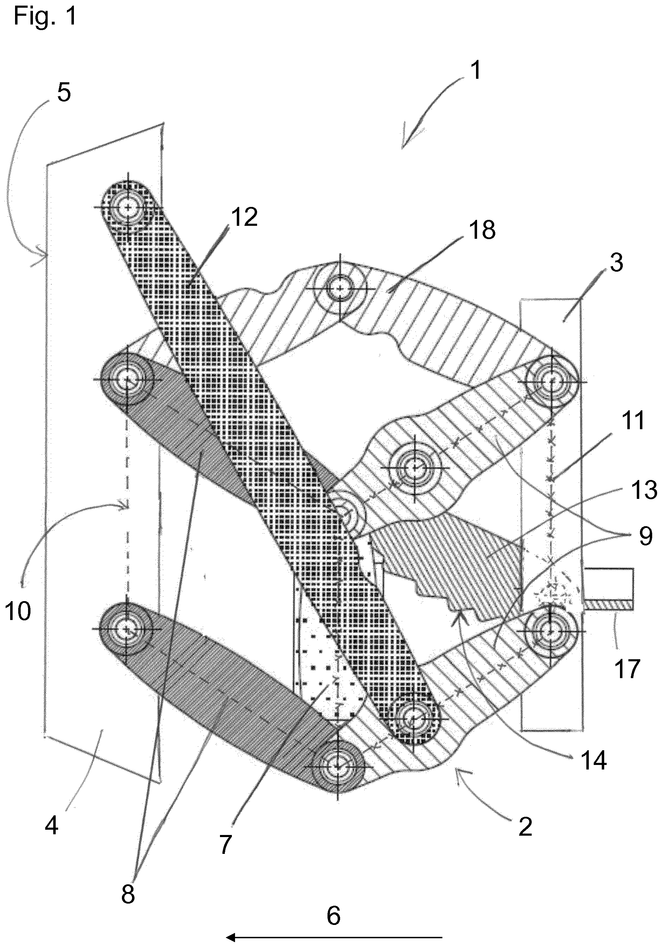

Fig. 1 stellt eine Seitenansicht eines ersten Ausführungsbeispiels einer Kopfstütze 1 mit einer Verstelleinrichtung 2 gemäß der Erfindung für ein nicht dargestelltes Kraftfahrzeug in einer Maximalstellung dar. Wie Fig. 1 zu entnehmen ist, weist die Kopfstütze 1 ein Basisteil 3 zur Befestigung an einer Rückenlehne eines Fahrzeugsitzes (beides nicht dargestellt) sowie ein zur Anlage für einen Kopf eines Fahrzeuginsassen (ebenfalls nicht dargestellt) ausgebildetes Kopfteil 4 auf. Das Basisteil 3 kann insbesondere indirekt, zum Beispiel über entsprechende Haltestangen oder Haltebügel (nicht dargestellt), in an sich bekannter Weise mit der Rückenlehne des Fahrzeugsitzes verbunden und so an dieser befestigt sein. Das Kopfteil 4 stellt an seiner Vorderseite eine Kopfanlagefläche 5 zur Anlage des Kopfs des Fahrzeuginsassen bereit. In der in Fig. 1 dargestellten Maximalstellung fällt der Abstand zwischen dem Basisteil 3 und dem Kopfteil 4 maximal aus.

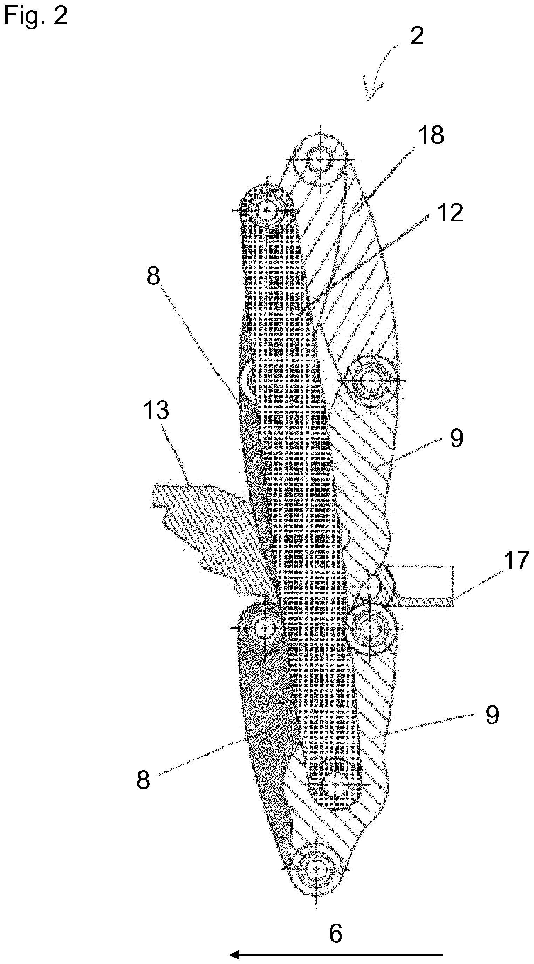

Wie in Fig. 1 ersichtlich, ist die Verstelleinrichtung 2 zwischen dem Basisteil 3 und dem Kopfteil 4 angeordnet, um eine im Wesentlichen lineare Verstellung des Kopfteils 4 zwischen einer Minimalstellung (siehe z. B. Fig. 2) und einer in Fig. 1 dargestellten Maximalstellung relativ zum Basisteil 3 zu bewirken. Bei dem in Fig. 1 dargestellten Ausführungsbeispiel der Kopfstütze 1 ist die Verstelleinrichtung 2 dazu ausgelegt, eine Verstellung der im Fahrzeug verbauten Kopfstütze 1 in einer im Wesentlichen zu einer Fahrzeuglängsachse 6 parallelen Richtung oder in einer Richtung, die die Fahrzeuglängsachse 6 in einem spitzen Winkel schneidet, vorzunehmen (Längsverstellung).

Fig. 1 ist weiterhin zu entnehmen, dass die Verstelleinrichtung 2 ein Zwischenteil 7 und mehrere, sich synchron bei der Verstellung unter einer Schwenkbewegung verschwenkende Schwenkhebel 8 und 9 aufweist. Hierbei sind die Schwenkhebel 8 und 9 so angeordnet und ausgebildet, dass die Schwenkhebel 8 und 9 zwischen dem Kopfteil 1 und dem Zwischenteil 7 wenigstens ein erstes Gelenkparallelogramm 10 und zwischen dem Zwischenteil 7 und dem Basisteil 3 wenigstens ein zweites Gelenkparallelogramm 11 ausbilden. Insbesondere ist in Fig. 1 zu erkennen, dass die beiden in der Seitenansicht sichtbaren Schwenkhebel 8 zusammen mit dem Kopfteil 4 und dem Zwischenteil 7 das erste Gelenkparallelogramm 10 ausbilden und die beiden in der Seitenansicht sichtbaren Schwenkhebel 9 zusammen mit dem Zwischenteil 7 und dem Basisteil 3 das zweite Gelenkparallelogramm 11 ausbilden.

Außerdem ist in Fig. 1 ersichtlich, dass die Verstelleinrichtung 2 wenigsten einen weiteren Synchronhebel 12 zwischen dem Kopfteil 4 und dem Basisteil 3 angeordnet aufweist, um eine relative Ausrichtung des Kopfteils 4 bezüglich des Basisteils 3 bei der Verstellung festzulegen und die Schwenkbewegung der Schwenkhebel 8 des ersten Gelenkparallelogramms 10 mit der Schwenkbewegung der Schwenkhebel 9 des zweiten Gelenkparallelogramms 11 zu synchronisieren. Hierzu ist, wie bei dem in Fig. 1 dargestellten Ausführungsbeispiel der Kopfstütze 1 zu erkennen ist, der Synchronhebel 12 einenends am Kopfteil 4 und anderenends am unteren der beiden Schwenkhebel 9 des zweiten Gelenkparallelogramms 11 schwenkbeweglich angelenkt ist.

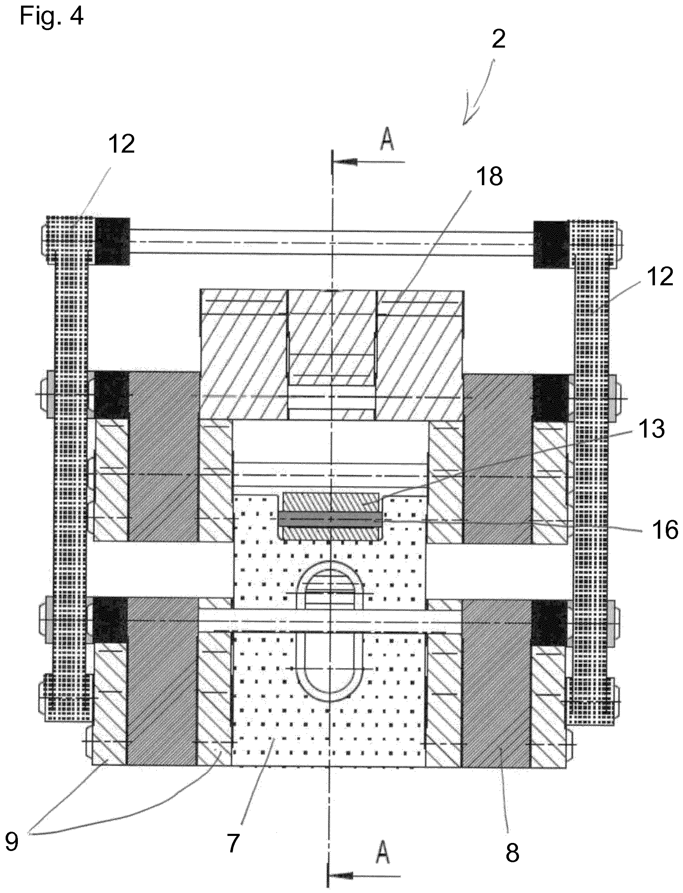

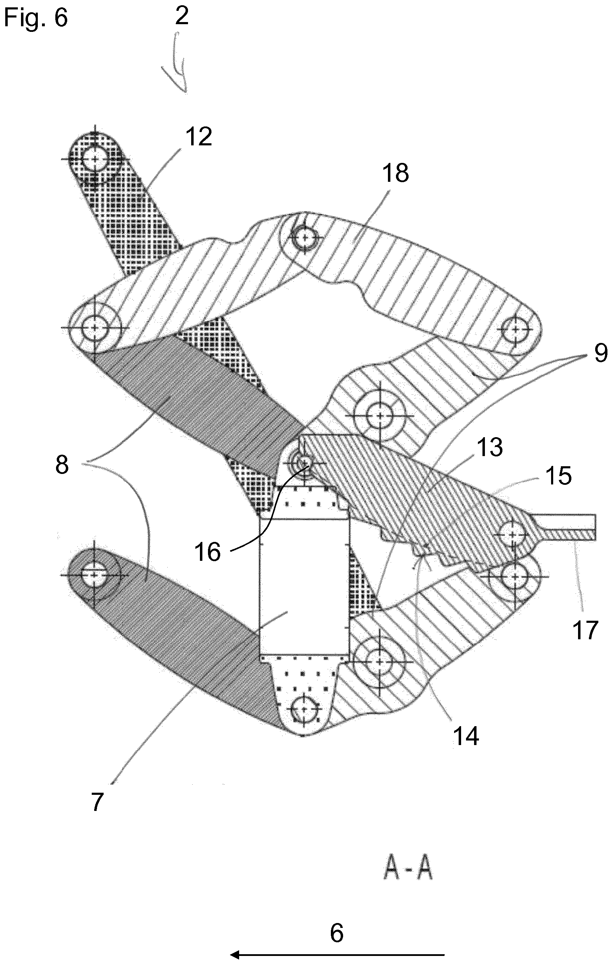

Des Weiteren ist in Fig. 1 zu erkennen, dass die in Fig. 1 dargestellte Kopfstütze 1 eine Rasteinrichtung aufweist, die wenigstens einen Rasthebel 13 beinhaltet, um das Kopfteil 4 bzw. dessen Abstand relativ zum Basisteil 3 rastend festzulegen. Insbesondere ist die Rasteinrichtung bzw. der Rasthebel 13 in dem in Fig. 1 dargestellten Ausführungsbeispiel der Kopfstütze 1 zwischen dem Basisteil 3 und dem Zwischenteil 7 wirksam angeordnet, wobei der Rasthebel 13 einseitig am Basisteil 3 verschwenkbar gelagert ist. Des Weiteren ist am Rasthebel 13 eine mehrere Raststufen definierende Rastkontur 14 ausgebildet, wobei die Anordnung der Raststufen der Rastkontur 14 durch eine Krümmung 15 (siehe Fig. 6) definiert ist. Die Raststufen der Rastkontur 14 sind zur Verrastung mit einem am Zwischenteil 7 vorgesehenen Raststeg 16 (siehe Fig. 4 und 6) in Eingriff bringbar. Der Rasthebel 13 sowie der Raststeg 16 bilden im Wesentlichen die hierin beschriebene Rasteinrichtung.

Ferner ist Fig. 1 zu entnehmen, dass der Rasthebel 13 an seinem schwenkbeweglich am Basisteil 3 festgelegten Ende eine Rasthebelverlängerung 17 aufweist, welche eine Betätigungsfläche für das manuelle Entrasten definiert. Bevorzugt ist der Rasthebel 13 den Rasteingriff herstellend elastisch vorgespannt.

Das in Fig. 1 dargestellte Ausführungsbeispiel der Kopfstütze 1 weist außerdem eine Kniehebelmechanik 18 auf, die zwischen dem Kopfteil 4 und dem Basisteil 3 vorgesehen ist. Mittels dieser Kniehebelmechanik 18 kann beispielsweise die Verstellung des Kopfteils 4 relativ zum Basisteil 3 in der Maximalstellung begrenzt und zusätzlich stabilisierend gehalten werden. Die Maximalstellung kann jedoch auch alleine, das heißt ohne Kniehebelmechanik 18, durch die Kinematik und die festgelegten geometrischen Beziehungen der an dem Kopfteil 4 schwenkbeweglich angelenkten Schwenkhebel 8 des ersten Gelenkparallelogramms 10, der mit diesen gelenkig verbundenen und an dem Basisteil 3 angelenkten Schwenkhebel 9 des zweiten Gelenkparallelogramms 11 sowie der ebenfalls an dem Kopfteil 4 und dem Zwischenteil 7 schwenkbeweglich angelenkten Synchronhebel 12 zueinander bewirkt werden.

Fig. 2 stellt eine Seitenansicht der Verstelleinrichtung 2 der Kopfstütze 1 aus Fig. 1 in einer Minimalstellung dar. Aus Gründen der Übersichtlichkeit sind das Basisteil 3 und das Kopfteil 4 in Fig. 2 nicht dargestellt. In der dargestellten Minimalstellung fällt der Abstand zwischen dem hier nicht dargestellten Basisteil 3 (Fig. 1) und dem hier ebenfalls nicht dargestellten Kopfteil 4 (Fig. 1) minimal aus.

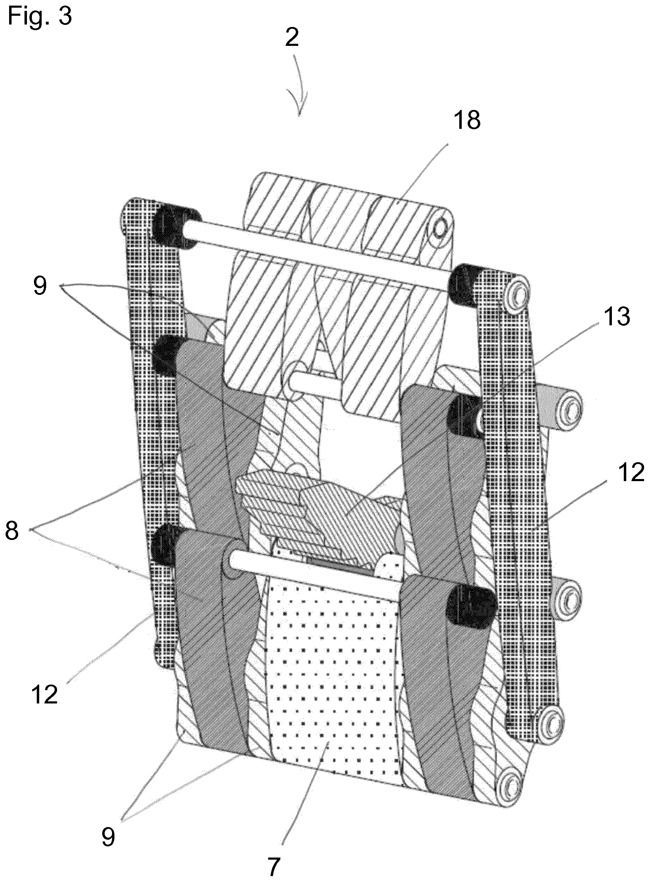

Fig. 3 stellt eine perspektivische Ansicht der Verstelleinrichtung 2 der Kopfstütze 1 aus Fig. 1 von schräg vorne in der Minimalstellung dar. In dieser Ansicht ist zu erkennen, dass bei dem dargestellten Ausführungsbeispiel der Kopfstütze 1 bzw. der Verstelleinrichtung 2 zu beiden Seiten des Zwischenteils 7 jeweils zwei Schwenkhebel 8 des ersten Gelenkparallelogramms 10 (vgl. Fig. 1) und zwei Schwenkhebel 9 des zweiten Gelenkparallelogramms 11 (vgl. Fig. 1) angeordnet sind. Jeder Schwenkhebel 9 ist bei dem dargestellten Ausführungsbeispiel der Verstelleinrichtung 2 U-förmig mit zwei in Fig. 3 sichtbaren, parallel zueinander verlaufenden Schenkeln ausgebildet, die über ein die beiden Schenkel miteinander verbindendes, in der Darstellung der Fig. 3 nicht sichtbares Verbindungsstück miteinander verbunden sind. Die Schwenkhebel 8 sind einenends jeweils schwenkbar am Zwischenteil 7 angelenkt und anderenends jeweils schwenkbar am Kopfteil 4 (Fig. 1). Die Schwenkhebel 9 sind einenends jeweils schwenkbar am Zwischenteil 7 angelenkt und anderenends jeweils schwenkbar am Basisteil 3 (Fig. 1). Wie Fig. 3 zu entnehmen ist, ist jeweils ein Schwenkhebel 8 zwischen zwei Schenkeln eines Schwenkhebels 9 angeordnet, wobei ein Schenkel des Schwenkhebels 9 (innerer Schenkel des Schwenkhebels 9) an der Innenseite des entsprechenden Schwenkhebels 8 und der andere Schenkel desselben Schwenkhebels 9 (äußerer Schenkel des Schwenkhebels 9) an der Außenseite des entsprechenden Schwenkhebels 8 angeordnet ist.

Bei dem in Fig. 3 dargestellten Ausführungsbeispiel der Kopfstütze 1 bzw. der Verstelleinrichtung 2 sind zwei Synchronhebel 12 vorgesehen, wobei einer an der linken Seite und einer an der rechten Seite des Zwischenteils 7 angeordnet ist. Wie in Fig. 3 zu erkennen ist, sind die Synchronhebel 12 an ihrem unteren Ende jeweils an dem unteren, äußeren Schenkel des entsprechenden Schwenkhebels 9 des zweiten Gelenkparallelogramms 11 (Fig. 1) schwenkbeweglich angelenkt. Das jeweilige entgegengesetzte Ende der Synchronhebel 12 ist an dem in Fig. 1 dargestellten Kopfteil 4 schwenkbeweglich angelenkt.

Fig. 4 stellt eine Vorderansicht der Verstelleinrichtung 2 der Kopfstütze 1 aus Fig. 1 in der Maximalstellung dar. In dieser Ansicht ist der am Zwischenteil 7 angeordnete Raststeg 16 zu erkennen, mit dem die Raststufen der Rastkontur 14 (Fig. 1) des Rasthebels 13 zur rastenden Festlegung der Verstelleinrichtung 2 in Eingriff bringbar sind.

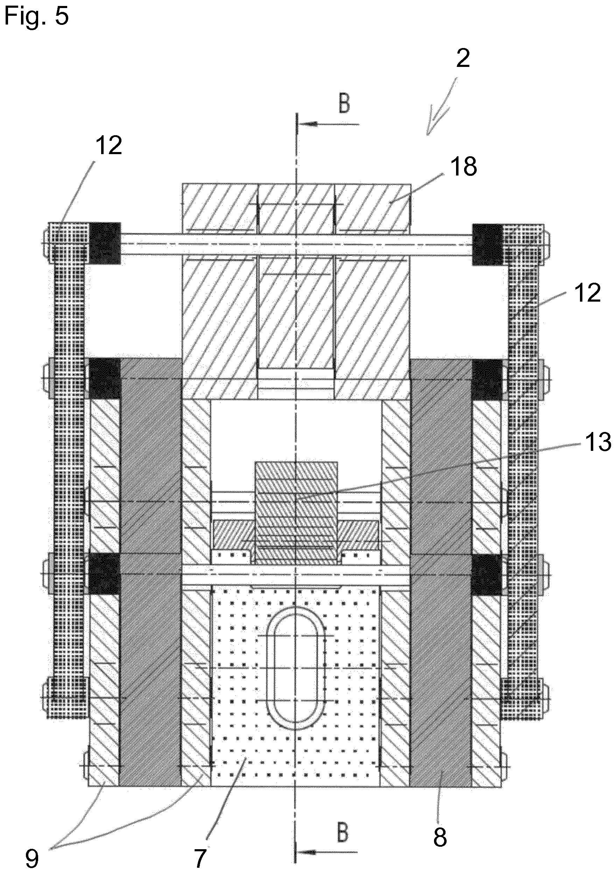

Fig. 5 stellt eine Vorderansicht der Verstelleinrichtung 2 der Kopfstütze 1 aus Fig. 1 in der Minimalstellung dar.

Fig. 6 stellt eine Seitenschnittansicht der Verstelleinrichtung 2 der Kopfstütze 1 aus Fig. 1 entlang der in Fig. 4 gezeigten Schnittlinie A-A in der Maximalstellung dar. Deutlich ist zum einen der gekrümmte Verlauf 15 der Rastkontur 14 zu erkennen und zum anderen der mit den Raststufen der Rastkontur 14 zusammenwirkende, am Zwischenteil 7 vorgesehene Raststeg 16.

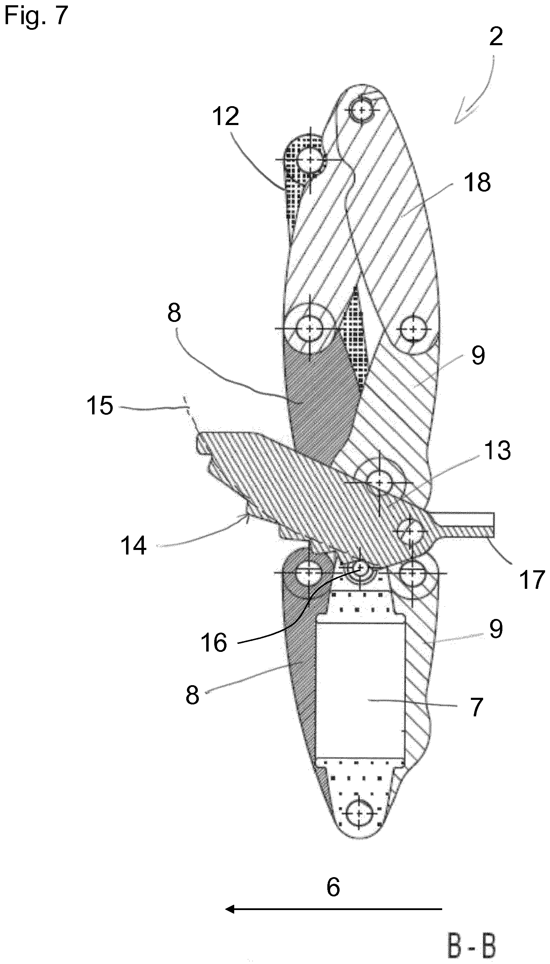

Fig. 7 stellt eine Seitenschnittansicht der Verstelleinrichtung 2 der Kopfstütze 1 aus Fig. 1 entlang der in Fig. 5 gezeigten Schnittlinie B-B in der Minimalstellung dar.

Wie die Zusammenschau der Fig. 1, 4 und 6 erkennen lässt, ist die den Rasthebel 13 und den Raststeg 16 aufweisende Rasteinrichtung der Verstelleinrichtung 2 wenigstens in der Maximalstellung in dem durch die ersten und zweiten Gelenkparallelogramme 10 und 11 definierten Bauvolumen zumindest teilweise, in dem dargestellten Ausführungsbeispiel der Kopfstütze 1 bzw. der Verstelleinrichtung 2 sogar vollständig mit Ausnahme der Rasthebelverlängerung 17, angeordnet.

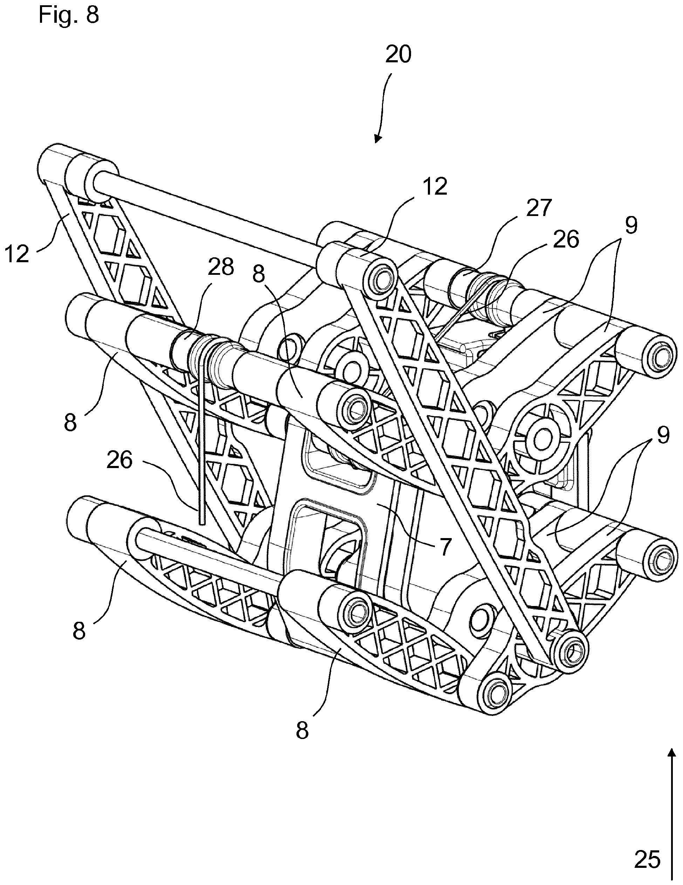

Fig. 8 stellt eine perspektivische Ansicht einer Verstelleinrichtung 20 eines zweiten Ausführungsbeispiels einer nicht näher dargestellten Kopfstütze gemäß der Erfindung von schräg vorne in einer Maximalstellung dar. Zur Ausbildung der Kopfstütze sind in analoger Weise zur Kopfstütze 1 aus Fig. 1 an der in Fig. 8 dem Betrachter zugewandten Vorderseite der Verstelleinrichtung 20 ein Kopfteil (nicht dargestellt) zur Anlage für einen Kopf eines Fahrzeuginsassen (nicht dargestellt) und an der dem Betrachter abgewandten Rückseite der Verstelleinrichtung 20 ein Basisteil (ebenfalls nicht dargestellt) zur Befestigung an einer Rückenlehne eines Fahrzeugsitzes (beides nicht dargestellt) anbringbar.

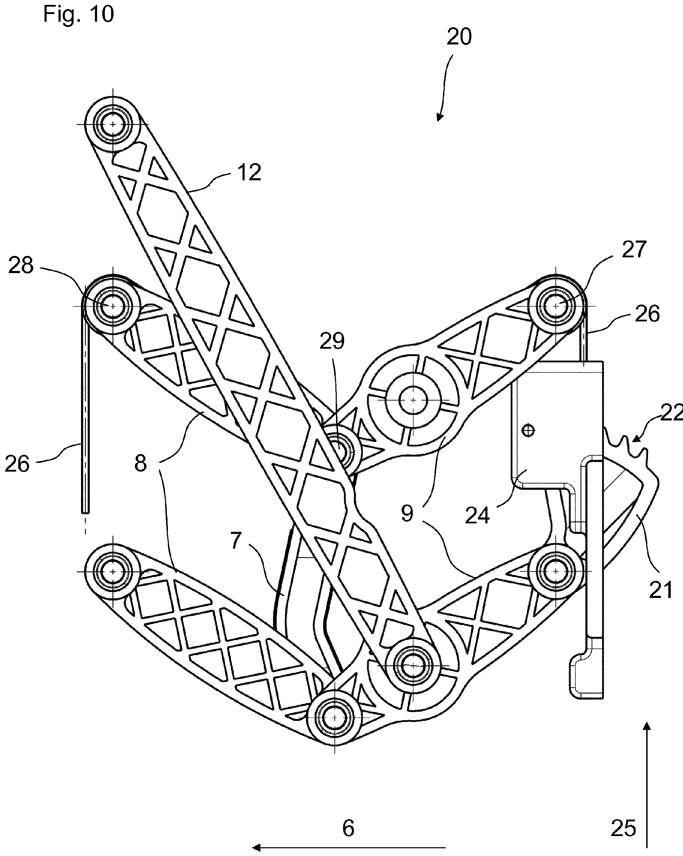

Im Unterschied zur in Fig. 1 dargestellten Verstelleinrichtung 2 der Kopfstütze 1 weist das in Fig. 8 dargestellte zweite Ausführungsbeispiel der Verstelleinrichtung 20 eine zur Verstelleinrichtung 2 verschieden ausgebildete, in Fig. 8 nicht vollständig zu erkennende Rasteinrichtung auf, die im Zusammenhang mit der Beschreibung der Fig. 10, 11, 12 und 15 ausführlicher erläutert werden wird. Ebenso weist die Verstelleinrichtung 20 keine Kniehebelmechanik 18 (Fig. 1) auf. Das heißt unter anderem, bei der Verstelleinrichtung 20 wird die Begrenzung der Verstellung in der in Fig. 8 dargestellten Maximalstellung alleine durch die Kinematik und die festgelegten geometrischen Beziehungen der an dem nicht dargestellten Kopfteil schwenkbeweglich angelenkten, insgesamt vier Schwenkhebel 8 des ersten Gelenkparallelogramms 10 (vgl. Fig. 1), der mit diesen gelenkig verbundenen und an dem ebenfalls nicht dargestellten Basisteil angelenkten, insgesamt vier ebenfalls U-förmig ausgebildeten Schwenkhebel 9 des zweiten Gelenkparallelogramms 11 (vgl. Fig. 1) sowie der beiden ebenfalls an dem Kopfteil schwenkbeweglich angelenkten Synchronhebel 12 zueinander bewirkt. Mit anderen Worten führt die Bewegungsmechanik des Zwischenteils 7, der Schwenkhebel 8 und 9 und der Synchronhebel 12 während einer Verstellung der Kopfstütze zu einer automatischen Hemmung der Bewegung der Verstelleinrichtung 20 in ihrer Maximalstellung, so dass der Abstand des Kopfteils relativ zum Basisteil über die definierte Maximalstellung hinaus nicht vergrößert werden kann.

Wie bereits bei der Verstelleinrichtung 2 der Kopfstütze 1 aus Fig. 1, weist auch die in Fig. 8 dargestellte Verstelleinrichtung 20 insgesamt vier Schwenkhebel 8 und vier U-förmig ausgebildete Schwenkhebel 9 mit jeweils zwei parallel zueinander verlaufenden und voneinander beabstandeten Schenkeln auf, wobei an jedem Schwenkhebel 8 an seiner Innenseite und seiner Außenseite jeweils ein Schenkel des Schwenkhebels 9 (entsprechend einem inneren und einem äußeren Schenkel desselben Schwenkhebels 9) angeordnet ist.

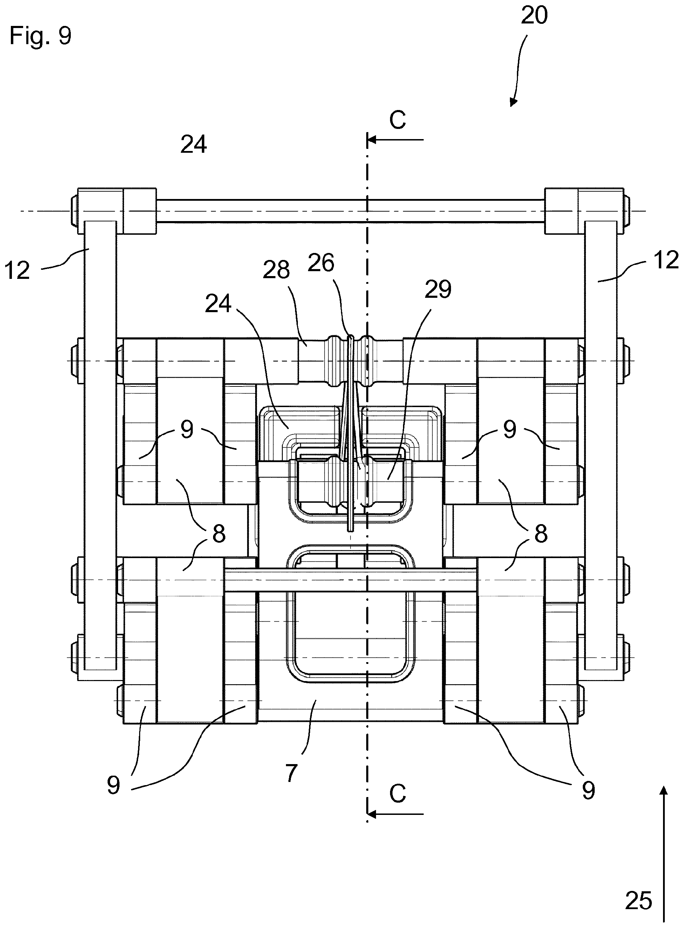

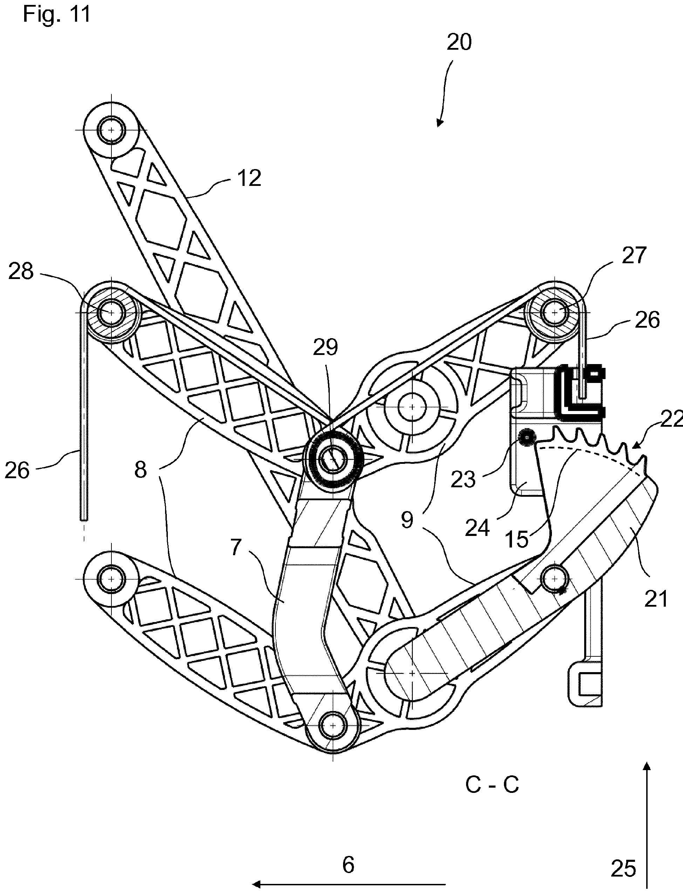

Fig. 9 stellt eine Vorderansicht der Verstelleinrichtung 20 aus Fig. 8 in der Maximalstellung dar, Fig. 10 stellt eine Seitenansicht der Verstelleinrichtung 20 aus Fig. 8 in der Maximalstellung dar und Fig. 11 stellt eine Seitenschnittansicht der Verstelleinrichtung 20 aus Fig. 8 in der Maximalstellung entlang der in Fig. 9 gezeigten Schnittlinie C-C dar.

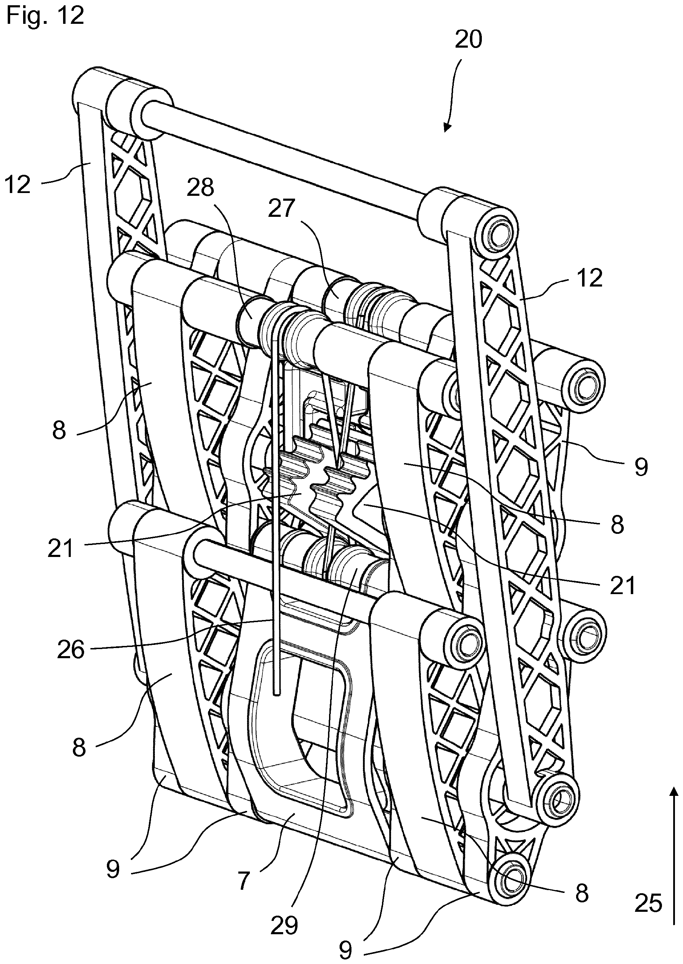

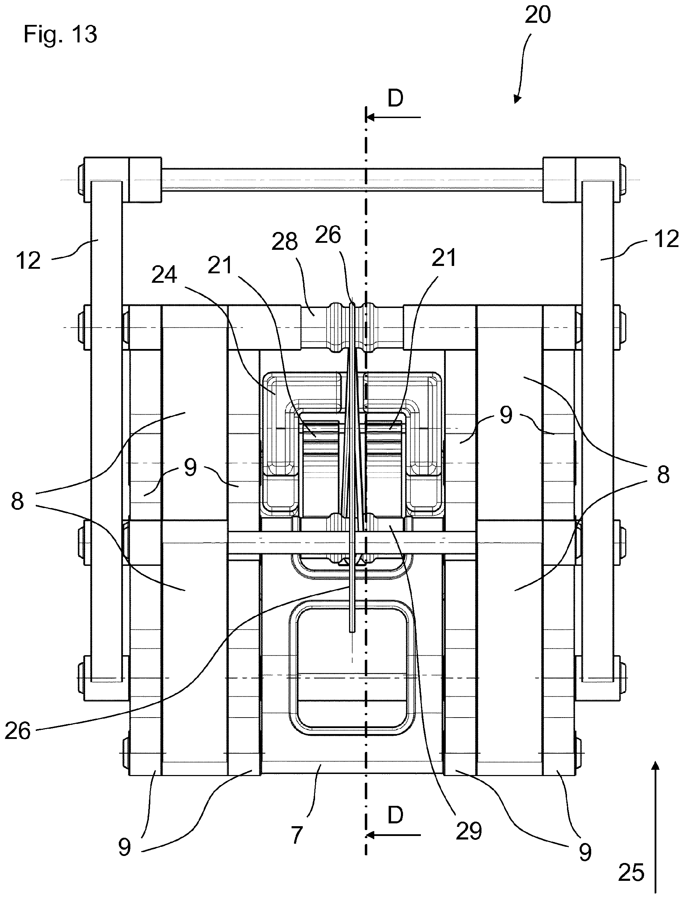

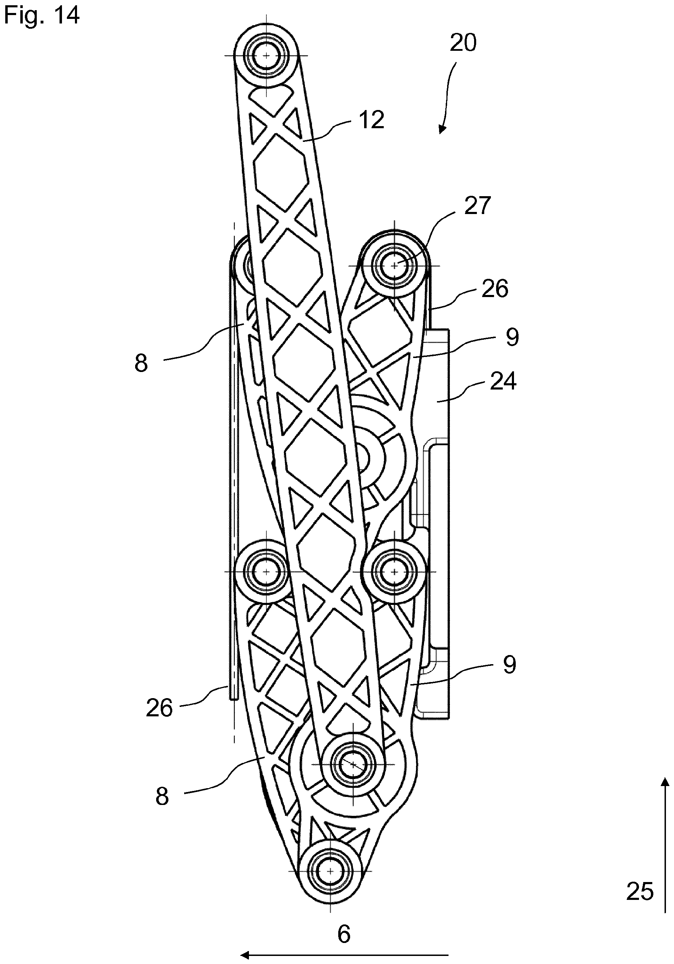

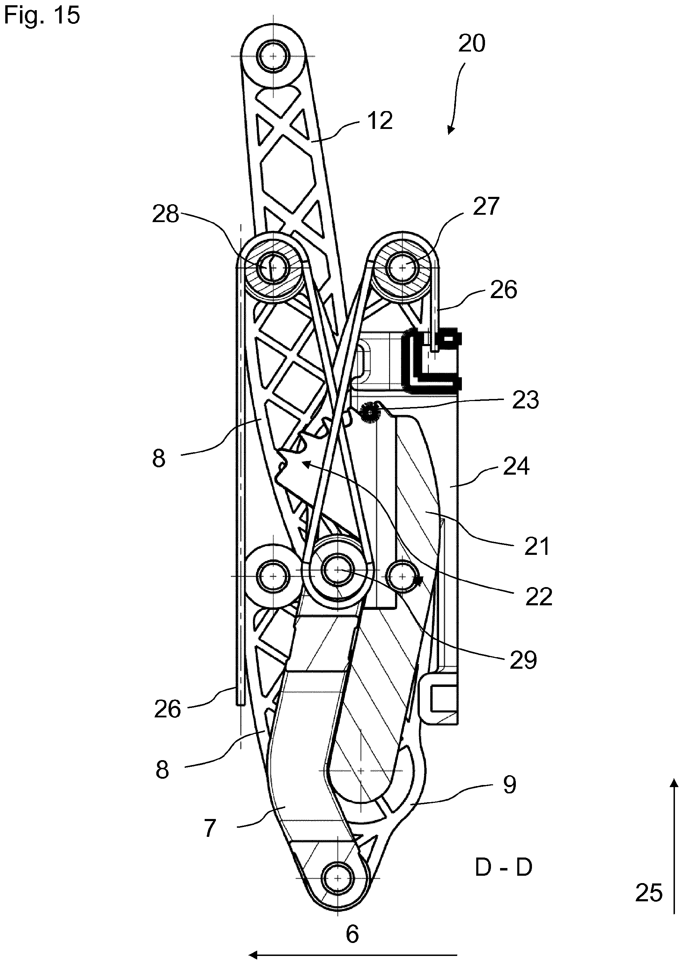

Den Fig. 8-11 entsprechende Darstellungen der Verstelleinrichtung 20 in der Minimalstellung sind in den Fig. 12-15 gezeigt. Dementsprechend stellt Fig. 12 eine perspektivische Ansicht der Verstelleinrichtung 20 aus Fig. 8 von schräg vorne in der Minimalstellung dar, Fig. 13 eine Vorderansicht der Verstelleinrichtung 20 aus Fig. 12 in der Minimalstellung, Fig. 14 eine Seitenansicht der Verstelleinrichtung 20 aus Fig. 12 in der Minimalstellung und Fig. 15 eine Seitenschnittansicht der Verstelleinrichtung 20 aus Fig. 12 in der Minimalstellung entlang der in Fig. 13 gezeigten Schnittlinie D-D.

In Fig. 11 ist die Rasteinrichtung des zweiten Ausführungsbeispiels der Verstelleinrichtung 20 deutlich zu erkennen. Die Rasteinrichtung weist wenigstens einen Rasthebel 21 mit einer entlang einer Krümmung verlaufenden, mehrere Raststufen aufweisende Rastkontur 22 sowie einen Raststeg 23 auf, der mit den Raststufen der Rastkontur 22 in unterschiedlichen Stellungen der Verstelleinrichtung 20 in Eingriff bringbar ist, um das an den Schwenkhebeln 8 und dem Synchronhebel 12 anbringbare Kopfteil (nicht dargestellt) bzw. dessen Abstand relativ zum an den Schwenkhebeln 9 anbringbare Basisteil (ebenfalls nicht dargestellt) rastend festzulegen.

Wie insbesondere in Fig. 11 zu erkennen ist, ist bei der Verstelleinrichtung 20 der Rasthebel 21 an der Innenseite des inneren Schenkels des unteren Schwenkhebels 9 angeordnet und bevorzugt fest mit diesem verbunden, so dass der Rasthebel 21 der Schwenkbewegung des inneren Schenkels des unteren Schwenkhebels 9 bei einer Verstellung der Verstelleinrichtung 20 folgt und insbesondere bei einer Verstellung der Verstelleinrichtung 20 gemeinsam mit dem inneren Schenkel des unteren Schwenkhebels 9 um den Anlenkpunkt des Schwenkhebels 9 am Basisteil (nicht dargestellt) schwenkt.

Der Raststeg 23 ist derart angeordnet, dass sich die Rastkontur 22 des Rasthebels 21 mit diesem in einen rastenden Eingriff bringen lässt. Zum Beispiel kann der Raststeg 23 an dem Basisteil (nicht dargestellt) gehalten sein, wobei der Raststeg 23 hierbei für ein manuelles Entrasten beispielsweise durch eine lineare Verschiebebewegung aus der Rastkontur 22 des Rasthebels 21 bewegbar bzw. verschiebbar gelagert ist. Bevorzugt ist der Raststeg 23 in diesem Fall den Rasteingriff herstellend elastisch vorgespannt.

Den Fig. 10 und 11 ist zu entnehmen, dass bei dem gezeigten Ausführungsbeispiel der Verstelleinrichtung 20 der Raststeg 23 in seiner Längserstreckung senkrecht zur Zeichenebene der Fig. 11 in einem Gehäuse 24 aufgenommen bzw. gehalten und in diesem bei im Fahrzeug verbautem Zustand der Verstelleinrichtung 20 bzw. Kopfstütze in Richtung einer Fahrzeughochachse 25 verschiebbar gelagert ist. Um diese Linearverschiebung des Raststegs 23 in Fahrzeughochrichtung 25 zu bewirken, steht der Raststeg 23 mit einem in den Fig. 8-15 dargestellten Betätigungsmittel 26, das in der gezeigten Ausführungsform ein Zugmittel 26 in Form eines Zugseils ist, in Wirkverbindung, um ein manuelles Entrasten der Rasteinrichtung bewirken zu können.

Wie beispielsweise der Fig. 11 deutlich zu entnehmen ist, ist das Zugseil 26 bei der dargestellten Verstelleinrichtung 20 basisteilseitig über eine wenigstens die Anlenkpunkte der oberen Schwenkhebel 9 am Basisteil (nicht dargestellt) miteinander verbindende Achse 27 umgelenkt und steht endseitig mit dem Raststeg 23 unmittelbar oder unter Zwischenschaltung weiterer, die Verschiebebewegung des Raststegs 23 führender Bauteile in Verbindung. Das entgegengesetzte Ende des Zugmittels 26 ist kopfteilseitig über eine wenigstens die Anlenkpunkte der oberen Schwenkhebel 8 am Kopfteil (nicht dargestellt) miteinander verbindende Achse 28 umgelenkt. Somit kann der Raststeg 23 durch Ziehen des Zugseils 26 an seinem kopfteilseitigen Ende aus dem Rasteingriff mit der Rastkontur 22 des Rasthebels 21 gebracht werden und die Verstelleinrichtung 20 folglich für eine Verstellung manuell entrastet werden.

Bevorzugt ist am Kopfteil (nicht dargestellt) ein Betätigungselement (ebenfalls nicht dargestellt), zum Beispiel ein Taster, Schalter, Hebel und dergleichen, angebracht, über welches das Betätigungsmittel bzw. Zugseil 26 und damit der Raststeg 23 betätigt werden können. Dies hat den besonderen Vorteil, dass das manuelle Entrasten der Verstelleinrichtung 20 bequem von einem Fahrzeuginsassen durchführbar ist, da das Betätigungselement am Kopfteil ungehindert zugänglich ist und sich während der Verstellung der Verstelleinrichtung 20 mit dem Kopfteil mitbewegt. Neben dem bevorzugt am Kopfteil angeordneten, nicht dargestellten Betätigungselement folgt auch das Betätigungsmittel bzw. Zugseil 26 der durch die Verstellung der Verstelleinrichtung 20 bewirkten Verstellbewegung.

Hierbei ist allerdings zu berücksichtigen, dass die Seillänge des Zugseils 26 zwischen dem zum Beispiel am Kopfteil (nicht dargestellt) angebrachten Betätigungselement (ebenfalls nicht dargestellt) und dem Raststeg 23 während der Verstellbewegung der Verstelleinrichtung 20 stets konstant bleibt, da eine Änderung dieser Seillänge anderenfalls zu einer unerwünschten Bewegung bzw. Verschiebung des Raststegs 23 entlang der Fahrzeughochachse 25 führen würde, die wiederum ein unkontrolliertes Einrasten des Raststegs 23 in die Rastkontur 22 des Rasthebels 21 zur Folge haben könnte. Eine präzise manuelle Verstellung der Verstelleinrichtung 20 in eine gewünschte Position ist somit nicht gewährleistet.

Um eine stets konstante Zugseillänge unabhängig von der augenblicklichen Verstellposition der Verstelleinrichtung 20 zwischen dem kopfteilseitigen Betätigungselement (nicht dargestellt) und dem basisteilseitigen Raststeg 23 zu gewährleisten, sieht das dargestellte Ausführungsbeispiel der Verstelleinrichtung 20 eine weitere Umlenkung des Zugseils 26 um eine die oberen Anlenkpunkte der oberen Schwenkhebel 9 am Zwischenteil 7 verbindende Achse 29 vor, wie insbesondere in Fig. 11 zu erkennen ist. Hierbei umschlingt das Zugseil 26 die Achse 29 derart, dass sich der Verlauf des Zugseils 29 oberhalb der Achse 29 kreuzt, wie in der Seitenschnittansicht der Fig. 11 deutlich zu erkennen ist.

Zwar bleiben der Abstand der Achse 27 zur Achse 29 und der Abstand der Achse 28 zur Achse 29 während einer Verstellung der Verstelleinrichtung 20 konstant, jedoch ändern sich hierbei infolge der Schwenkbewegung der Schwenkhebel 8 und 9 die Winkellagen der Achsen 27 und 28 jeweils zur Achse 29. Infolge dieser Relativbewegung der Achsen 28 bzw. 27 kreisförmig um die Achse 29 ändert sich die Länge des umfänglich um die Achsen 27, 28 und 29 anliegenden Seilabschnitts (hierin auch als Umschlingungslänge bezeichnet). Insbesondere nimmt die Umschlingungslänge des Zugseils 26 um die Achsen 27 und 28 bei einer Verstellung von der Minimalstellung in die Maximalstellung der Verstelleinrichtung 20 infolge der sich hierbei voneinander entfernenden Achsen 27 und 28 ab. Dies lässt sich zum Beispiel anhand eines Vergleichs der in Fig. 15 dargestellten Minimalstellung der Verstelleinrichtung 20 mit der in Fig. 11 dargestellten Maximalstellung der Verstelleinrichtung 20 erkennen.

Um die bei dieser Verstellung hervorgerufene Abnahme der Umschlingungslänge des Zugseils 26 sowohl um die Achse 27 als auch um die Achse 28 auszugleichen, ist das Zugseil 26 in der zuvor beschriebenen und in den Fig. 11 und 15 deutlich zu erkennenden Art und Weise um die Achse 29 geschlungen, da die Umschlingungslänge des Zugseils 26 um die Achse 29 bei der Verstellung von der Minimalstellung in die Maximalstellung der Verstelleinrichtung 20 in vorteilhafter Weise in dem Maße zunimmt, wie die Umschlingungslänge des Zugseils 26 um die Achsen 27 und 28 hierbei abnimmt. Bei einer entgegengesetzten Verstellbewegung der Verstelleinrichtung 20, das heißt zum Beispiel von der Maximalstellung in die Minimalstellung, verhält es sich entsprechend umgekehrt, das heißt, die Umschlingungslänge des Zugseils 26 um die Achse 29 nimmt ab, während die Umschlingungslänge des Zugseils 26 um die Achsen 27 und 28 in entsprechendem Maße zunimmt. Auf diese Weise ist stets, das heißt bei einer beliebigen Verstellung der Verstelleinrichtung 20, eine konstante Seillänge des Zugseils 26 zwischen seinem kopfteilseitigen Ende, das vorzugsweise mit einem sich mit dem Kopfteil (nicht dargestellt) mitbewegenden Betätigungselement (ebenfalls nicht dargestellt) verbunden ist, und seinem basisteilseitigen Ende, das mit dem Raststeg 23 verbunden ist, gewährleistet, so dass eine stets kontrollierte Verrastung der Verstelleinrichtung 20 in der gewünschten Verstellung bewirkt werden kann.

In Fig. 12 ist ferner zu erkennen, dass das dargestellte Ausführungsbeispiel der Verstelleinrichtung 20 einen U-förmig ausgebildeten Rasthebel 21 mit zwei zueinander parallel verlaufenden und zueinander beabstandeten Schenkeln aufweist, von denen jeweils einer an der Innenseite des inneren Schenkels des entsprechenden unteren Schwenkhebels 9 angeordnet und fest mit diesem verbunden ist. Die U-förmige Ausbildung des Rasthebels 21 mit dem zwischen beiden Schenkeln vorgesehenen Zwischenraum bietet den Vorteil, dass in diesem Zwischenraum das Betätigungsmittel bzw. Zugseil 26 der Verstelleinrichtung 20 ungehindert verlaufen kann.

Außerdem ist den Fig. 14 und 15 zu entnehmen, dass die Rasteinrichtung, das heißt der Rasthebel 21 sowie der Raststeg 23, wenigstens in der abgebildeten Minimalstellung der Verstelleinrichtung 20 vollständig in dem durch die ersten und zweiten Gelenkparallelogramme 10 und 11 (vgl. Fig. 1) definierten Bauvolumen angeordnet ist.

In bevorzugter Ausführung wird die erfindungsgemäße Kopfstütze in einem Kraftfahrzeug, insbesondere als Kopfstütze mit Längsverstellung, verwendet.

### Bezugszeichenliste:

- 1: Kopfstütze
- 2: Verstelleinrichtung
- 3: Basisteil
- 4: Kopfteil
- 5: Kopfanlagefläche
- 6: Fahrzeuglängsachse
- 7: Zwischenteil
- 8: Schwenkhebel
- 9: Schwenkhebel
- 10: Erstes Gelenkparallelogramm
- 11: Zweites Gelenkparallelogramm
- 12: Synchronhebel
- 13: Rasthebel
- 14: Rastkontur
- 15: Krümmung von 14
- 16: Raststeg
- 17: Rasthebelverlängerung
- 18: Kniehebelmechanik
- 20: Verstelleinrichtung
- 21: Rasthebel
- 22: Rastkontur
- 23: Raststeg
- 24: Gehäuse
- 25: Fahrzeughochachse
- 26: Betätigungsmittel, Zugseil
- 27: Obere basisteilseitige Umlenkachse von 9
- 28: Obere kopfteilseitige Umlenkachse von 8
- 29: Obere Umlenkachse von 7

## Patentansprüche

1. Kopfstütze für ein Kraftfahrzeug mit einem Basisteil (3) zur Befestigung an einer Rückenlehne eines Fahrzeugsitzes und einem zur Anlage für einen Kopf eines Fahrzeuginsassen ausgebildeten Kopfteil (4) und einer Verstelleinrichtung (2, 20) zwischen Basisteil (3) und Kopfteil (4), um eine im Wesentlichen lineare Verstellung des Kopfteils (4) zwischen einer Minimalstellung und einer Maximalstellung relativ zum Basisteil (3) zu bewirken, wobei die Verstelleinrichtung (2, 20) ein Zwischenteil (7) und mehrere sich synchron bei der Verstellung unter einer Schwenkbewegung verschwenkende Schwenkhebel (8, 9) aufweist, die so angeordnet und ausgebildet sind, dass zwischen dem Kopfteil (4) und dem Zwischenteil (7) wenigstens ein erstes Gelenkparallelogramm (10) und zwischen dem Zwischenteil (7) und dem Basisteil (3) wenigstens ein zweites Gelenkparallelogramm (11) ausgebildet sind und die Verstelleinrichtung (2, 20) wenigsten einen weiteren Synchronhebel (12) zwischen dem Kopfteil (4) und dem Basisteil (3) aufweist, um eine relative Ausrichtung des Kopfteils (4) bezüglich des Basisteils (3) bei der Verstellung festzulegen und die Schwenkbewegung der Schwenkhebel (8) des ersten Gelenkparallelogramms (10) mit der Schwenkbewegung der Schwenkhebel (9) des zweiten Gelenkparallelogramms (11) zu synchronisieren, wobei die Kopfstütze ferner eine Rasteinrichtung (13, 16; 21, 23) aufweist, um das Kopfteil (4) relativ zum Basisteil (3) rastend festzulegen.

2. Kopfstütze gemäß Anspruch 1,
**dadurch gekennzeichnet, dass**
die Rasteinrichtung (13, 16) einen einseitig verschwenkbar gelagerten Rasthebel (13) aufweist.

3. Kopfstütze gemäß dem vorhergehenden Anspruch 2, **dadurch gekennzeichnet, dass**
der einseitig verschwenkbar gelagerte Rasthebel (13) am Basisteil (3) schwenkbeweglich gelagert ist.

4. Kopfstütze gemäß einem der beiden vorhergehenden Ansprüche 2,3, **dadurch gekennzeichnet, dass**
der einseitig verschwenkbar gelagerte Rasthebel (13) an seinem schwenkbeweglich festgelegten Ende eine Rasthebelverlängerung (17) aufweist, welche eine Betätigungsfläche für das manuelle Entrasten definiert.

5. Kopfstütze gemäß einem der beiden vorhergehenden Ansprüche 3,4, **dadurch gekennzeichnet, dass**
die Verstelleinrichtung (2) wenigstens zwei erste und zwei zweite Gelenkparallelogramme (10, 11) aufweist und die Rasteinrichtung (13, 16) in der Maximalstellung in dem durch die ersten und zweiten Gelenkparallelogramme (10, 11) definierten Bauvolumen zumindest teilweise, bevorzugt vollständig ausgenommen eine an dem einseitig verschwenkbar gelagerten Rasthebel (13) an seinem schwenkbeweglich festgelegten Ende ausgebildete Rasthebelverlängerung (17), angeordnet ist.

6. Kopfstütze gemäß einem der Ansprüche 2 bis 5,
**dadurch gekennzeichnet, dass**
der Rasthebel (13) den Rasteingriff herstellend elastisch vorgespannt ist.

7. Kopfstütze gemäß Anspruch 1,
**dadurch gekennzeichnet, dass**
die Rasteinrichtung (21, 23) wenigstens einen mit einem der Schwenkhebel (9) eines der zweiten Gelenkparallelogramme (11) verbundenen Rasthebel (21) aufweist.

8. Kopfstütze gemäß dem vorhergehenden Anspruch 7, **dadurch gekennzeichnet, dass**
die Verstelleinrichtung (20) wenigstens zwei erste und zwei zweite Gelenkparallelogramme (10, 11) aufweist und die Rasteinrichtung (21, 23) wenigstens in der Minimalstellung in dem durch die ersten und zweiten Gelenkparallelogramme (10, 11) definierten Bauvolumen zumindest teilweise, bevorzugt vollständig, angeordnet ist.

9. Kopfstütze gemäß einem der beiden vorhergehenden Ansprüche 7,8, **dadurch gekennzeichnet, dass**
die Rasteinrichtung (21, 23) ein der bei einer Verstellung der Verstelleinrichtung (20) bewirkten Verstellbewegung der Verstelleinrichtung (20) folgendes, mit der Rasteinrichtung (21, 23) wirkverbundenes Betätigungsmittel (26) für das manuelle Entrasten aufweist.

10. Kopfstütze gemäß einem der vorhergehenden Ansprüche,
**dadurch gekennzeichnet, dass**
die Rasteinrichtung (13, 16; 21, 23) zwischen dem Basisteil (3) und dem Zwischenteil (7) oder zwischen dem Basisteil (3) und einem der Schwenkhebel (9) eines der zweiten Gelenkparallelogramme (11) wirksam angeordnet ist.

11. Kopfstütze gemäß einem der vorhergehenden Ansprüche 9,10, **dadurch gekennzeichnet, dass**
die Rasteinrichtung (13, 16; 21, 23) eine mehrere Raststufen definierende Rastkontur (14, 22) aufweist, die bevorzugt am Rasthebel (13, 21) ausgebildet ist.

12. Kopfstütze gemäß dem vorhergehenden Anspruch 11, **dadurch gekennzeichnet, dass**
die Anordnung der Raststufen der Rastkontur (14, 22) durch eine Krümmung (15) definiert ist.

13. Kopfstütze gemäß einem der vorhergehenden Ansprüche,
**dadurch gekennzeichnet, dass**
der Synchronhebel (12) am Kopfteil (4) und an einem der Schwenkhebel (9) eines der zweiten Gelenkparallelogramme (11) angelenkt ist.

14. Kopfstütze gemäß einem der vorhergehenden Ansprüche,
**dadurch gekennzeichnet, dass**
ferner eine Kniehebelmechanik (18), beispielsweise zwischen Kopfteil (4) und Basisteil (3), vorgesehen ist, um die Verstellung des Kopfteils (4) relativ zum Basisteil (3) in der Maximalstellung zu begrenzen.

15. Verwendung einer Kopfstütze gemäß einem der vorhergehenden Ansprüche in einem Kraftfahrzeug, insbesondere als Kopfstütze mit Längsverstellung.

## Claims

1. Headrest for a motor vehicle, having a base part (3) for fastening to a backrest of a vehicle seat and having a head part (4) configured for a vehicle occupant's head to bear against and having an adjusting device (2, 20) between the base part (3) and head part (4), in order to bring about a substantially linear adjustment of the head part (4), between a minimum position and a maximum position, relative to the base part (3), wherein the adjusting device (2, 20) has an intermediate part (7) and a plurality of pivot levers (8, 9) which pivot synchronously during the adjusting operation by way of a pivoting movement and which are arranged, and configured, in such a way that at least a first four-bar linkage (10) is formed between the head part (4) and the intermediate part (7) and at least a second four-bar linkage (11) is formed between the intermediate part (7) and the base part (3), and the adjusting device (2, 20) has at least one further synchronizing lever (12) between the head part (4) and the base part (3), in order to fix an orientation of the head part (4) relative to the base part (3) during the adjusting operation and to synchronize the pivoting movement of the pivot levers (8) of the first four-bar linkage (10) with the pivoting movement of the pivot levers (9) of the second four-bar linkage (11), wherein the headrest also has a latching device (13, 16; 21, 23) in order to fix the head part (4) relative to the base part (3) with latching action.

2. Headrest according to Claim 1,
**characterized in that**
the latching device (13, 16) has a latching lever (13) mounted so as to be pivotable at one end.

3. Headrest according to preceding Claim 2,
**characterized in that**
the latching lever (13), which is mounted so as to be pivotable at one end, is mounted so as to be pivotable on the base part (3).

4. Headrest according to one of the two preceding Claims 2 and 3,
**characterized in that**
the latching lever (13), which is mounted so as to be pivotable at one end, has, at its end which is fixed in a pivotable manner, a latching lever extension (17) which defines an actuating surface for manual unlatching.

5. Headrest according to one of the two preceding Claims 3 and 4,
**characterized in that**
the adjusting device (2) has at least two first and two second four-bar linkages (10, 11), and, in the maximum position, the latching device (13, 16) is arranged in the overall volume defined by the first and second four-bar linkages (10, 11), at least in part, preferably completely except for a latching lever extension (17) configured on the latching lever (13), which is mounted so as to be pivotable at one end, at that end thereof which is fixed in a pivotable manner.

6. Headrest according to one of Claims 2 to 5,
**characterized in that**
the latching lever (13) is preloaded elastically so as to produce the latching engagement.

7. Headrest according to Claim 1,
**characterized in that**
the latching device (21, 23) has at least one latching lever (21) connected to one of the pivot levers (9) of one of the second four-bar linkages (11) .

8. Headrest according to preceding Claim 7,
**characterized in that**
the adjusting device (20) has at least two first and two second four-bar linkages (10, 11), and, at least in the minimum position, the latching device (21, 23) is arranged in the overall volume defined by the first and second four-bar linkages (10, 11), at least in part, preferably completely.

9. Headrest according to one of the two preceding Claims 7 and 8,
**characterized in that**
the latching device (21, 23) has an actuating means (26) which is intended for manual unlatching and follows the adjusting movement of the adjusting device (20) brought about during an adjustment of the adjusting device (20) and is operatively connected to the latching device (21, 23).

10. Headrest according to one of the preceding claims,
**characterized in that**
the latching device (13, 16; 21, 23) is arranged so as to take effect between the base part (3) and the intermediate part (7) or between the base part (3) and one of the pivot levers (9) of one of the second four-bar linkages (11) .

11. Headrest according to one of the preceding Claims 9 and 10,
**characterized in that**
the latching device (13, 16; 21, 23) has a latching contour (14, 22) which defines a plurality of latching steps and which is preferably formed on the latching lever (13, 21).

12. Headrest according to preceding Claim 11,
**characterized in that**
the arrangement of the latching steps of the latching contour (14, 22) is defined by a curvature (15) .

13. Headrest according to one of the preceding claims,
**characterized in that**
the synchronizing lever (12) is articulated on the head part (4) and on one of the pivot levers (9) of one of the second four-bar linkages (11).

14. Headrest according to one of the preceding claims,
**characterized in that**
provision is also made for a toggle lever mechanism (18), for example between the head part (4) and base part (3), in order to delimit the adjustment of the head part (4) relative to the base part (3) in the maximum position.

15. Use of a headrest according to one of the preceding claims in a motor vehicle, in particular as a headrest with longitudinal adjustment.

## Revendications

1. Appui-tête pour un véhicule automobile, comprenant une partie de base (3) pour la fixation à un dossier d'un siège de véhicule et une partie de tête (4) prévue pour l'appui d'une tête d'un occupant du véhicule, et un dispositif de réglage (2, 20) entre la partie de base (3) et la partie de tête (4), afin de provoquer un déplacement essentiellement linéaire de la partie de tête (4) entre une position minimale et une position maximale par rapport à la partie de base (3), le dispositif de réglage (2, 20) présentant une partie intermédiaire (7) et plusieurs leviers pivotants (8, 9) pivotant de manière synchrone lors du réglage en effectuant un mouvement de pivotement, lesquels sont disposés et réalisés de telle sorte qu'entre la partie de tête (4) et la partie intermédiaire (7) soit réalisé au moins un premier parallélogramme articulé (10) et qu'entre la partie arrière (7) et la partie de base (3) soit réalisé au moins un deuxième parallélogramme articulé (11), et le dispositif de réglage (2, 20) présentant au moins un levier synchrone supplémentaire (12) entre la partie de tête (4) et la partie de base (3), afin de fixer une orientation relative de la partie de tête (4) par rapport à la partie de base (3) lors du réglage et de synchroniser le mouvement de pivotement du levier pivotant (8) du premier parallélogramme articulé (10) avec le mouvement de pivotement du levier pivotant (9) du deuxième parallélogramme articulé (11), l'appui-tête présentant en outre un dispositif d'encliquetage (13, 16 ; 21, 23) afin de fixer par encliquetage la partie de tête (4) par rapport à la partie de base (3).

2. Appui-tête selon la revendication 1,
**caractérisé en ce que**
le dispositif d'encliquetage (13, 16) présente un levier d'encliquetage (13) supporté de manière pivotante d'un côté.

3. Appui-tête selon la revendication 2 précédente,
**caractérisé en ce que**
le levier d'encliquetage (13) supporté de manière pivotante d'un côté est supporté de manière à effectuer un mouvement de pivotement au niveau de la partie de base (3).

4. Appui-tête selon l'une quelconque des deux revendications précédentes 2 et 3,
**caractérisé en ce que**
le levier d'encliquetage (13) supporté de manière pivotante d'un côté présente, au niveau de son extrémité fixée par un mouvement de pivotement, un prolongement de levier d'encliquetage (17) qui définit une surface d'actionnement pour le désencliquetage manuel.

5. Appui-tête selon l'une quelconque des deux revendications précédentes 3 et 4,
**caractérisé en ce que**
le dispositif de réglage (2) présente au moins deux premiers et deux deuxièmes parallélogrammes articulés (10, 11) et le dispositif d'encliquetage (13, 16), dans la position maximale, est disposé au moins en partie, de préférence complètement, dans le volume de construction défini par les premiers et les deuxièmes parallélogrammes articulés (10, 11) à l'exception d'un prolongement de levier d'encliquetage (17) réalisé au niveau du levier d'encliquetage (13) supporté de manière pivotante d'un côté au niveau de son extrémité fixée par un mouvement de pivotement .

6. Appui-tête selon l'une quelconque des revendications 2 à 5,
**caractérisé en ce que**
le levier d'encliquetage (13) est précontraint élastiquement en créant l'engagement d'encliquetage.

7. Appui-tête selon la revendication 1,
**caractérisé en ce que**
le dispositif d'encliquetage (21, 23) présente au moins un levier d'encliquetage (21) connecté à l'un des leviers pivotants (9) de l'un des deuxièmes parallélogrammes articulés (11).

8. Appui-tête selon la revendication 7 précédente,
**caractérisé en ce que**
le dispositif de réglage (20) présente au moins deux premiers et deux deuxièmes parallélogrammes articulés (10, 11) et le dispositif d'encliquetage (21, 23) est disposé au moins en partie, de préférence complètement, au moins dans la position minimale dans le volume de construction défini par les premiers et deuxièmes parallélogrammes articulés (10, 11).

9. Appui-tête selon l'une quelconque des deux revendications précédentes 7 et 8,
**caractérisé en ce que**
le dispositif d'encliquetage (21, 23) présente un moyen d'actionnement (26) pour le désencliquetage manuel, en liaison fonctionnelle avec le dispositif d'encliquetage (21, 23), et suivant le déplacement de réglage du dispositif de réglage (20) provoqué lors d'un réglage du dispositif de réglage (20).

10. Appui-tête selon l'une quelconque des revendications précédentes,
**caractérisé en ce que**
le dispositif d'encliquetage (13, 16 ; 21, 23) est disposé de manière active entre la partie de base (3) et la partie intermédiaire (7) ou entre la partie de base (3) et l'un des leviers pivotants (9) de l'un des deuxièmes parallélogrammes articulés (11) .

11. Appui-tête selon l'une quelconque des revendications précédentes 9 et 10,
**caractérisé en ce que**
le dispositif d'encliquetage (13, 16 ; 21, 23) présente un contour d'encliquetage (14, 22) définissant plusieurs degrés d'encliquetage, qui est réalisé de préférence sur le levier d'encliquetage (13, 21).

12. Appui-tête selon la revendication 11 précédente,
**caractérisé en ce que**
l'agencement des degrés d'encliquetage du contour d'encliquetage (14, 22) est défini par une courbure (15).

13. Appui-tête selon l'une quelconque des revendications précédentes,
**caractérisé en ce que**
le levier synchrone (12) est articulé à la partie de tête (4) et à l'un des leviers pivotants (9) de l'un des deuxièmes parallélogrammes articulés (11).

14. Appui-tête selon l'une quelconque des revendications précédentes,
**caractérisé en ce**
**qu'**il est en outre prévu un mécanisme de levier à genouillère (18), par exemple entre la partie de tête (4) et la partie de base (3), afin de limiter le réglage de la partie de tête (4) par rapport à la partie de base (3) dans la position maximale.

15. Utilisation d'un appui-tête selon l'une quelconque des revendications précédentes dans un véhicule automobile, en particulier en tant qu'appui-tête avec réglage longitudinal.
